# NEUE EUROPÄISCHE PATENTSCHRIFT

(11) **EP 2 196 273 B2**
(45) Veröffentlichungstag und Bekanntmachung des Hinweises auf die Entscheidung über den Einspruch: **07.03.2018**
(45) Hinweis auf die Patenterteilung: 14.11.2012
(21) Anmeldenummer: 09178805.9
(22) Anmeldetag: 11.12.2009
(51) Int. Cl.: B23B 31/02

(54) **Schnittstelle zwischen einem rundlaufenden Schaftwerkzeug und einer Schmiermittel-Übergabestelle in einer Werkzeugaufnahme**
Interface between a revolving shaft tool and a lubricant discharge point in a tool holder
Interface entre un outil à pointe émoussée et un poste de transfert d'agent lubrifiant dans une réception d'outils

(30) Priorität: 11.12.2008 US 332599
(43) Veröffentlichungstag der Anmeldung: 16.06.2010
(73) Patentinhaber: Gühring OHG, 72458 Albstadt (DE)
(72) Erfinder: Hänle, Peter, Dr., Wales, WI 53183 (US)
(74) Vertreter: Winter, Brandl, Fürniss, Hübner, Röss, Kaiser, Polte - Partnerschaft mbB

(56) Entgegenhaltungen:
- WO-A1-2005/105351
- DE-U1-202005 016 550
- JP-A- 5 212 650
- US-A- 3 313 186
- US-A1- 2006 029 479
- US-A1- 2006 029 480

## Beschreibung

Die Erfindung betrifft eine für die MMS-Technologie taugliche Schnittstelle zwischen und mit einem in einer Werkzeugaufnahme aufgenommenen Schaftwerkzeug und einer in der Werkzeugaufnahme vorgesehenen Schmiermittel-Übergabestelle nach dem Oberbegriff des Anspruchs 1 sowie eine als Schmiermittel-Übergabestelle geeignete Stellschraube.

Die MMS-Technologie, d.h. die sogenannte Minder- bzw. Minimalmengenschmierung, gewinnt insbesondere in der spanenden Bearbeitungstechnik zunehmend an Bedeutung. Dabei geht es darum, ein Schmiermittel in Form eines Aerosols mit einem minimalen Anteil an Schmiermittel und einem erheblichen Luftüberschuss in möglichst gleichmäßiger Konsistenz und Qualität an die im Eingriff befindlichen Schneiden zu bringen. Schwankungen in der Qualität, die z.B. dadurch hervorgerufen werden, dass in dem unter Druck zugeführten Aerosol zyklische oder spontane Entmischungen auftreten, können zu unvorhersehbarem Werkzeugbruch und in der Folge aufgrund Produktionsunterbrechung zu erheblichen Schäden führen. Der Werkzeugbruch ist dabei eine Folge der Überlastung der Werkzeuge aufgrund hoher Vorschubkräfte in Kombination mit der durch das Schmiermittel zu reduzierenden, reibungsbedingten Temperaturbelastung insbesondere an den Werkzeugschneiden, die bei ungenügender Schmiermittelversorgung dazu führt, dass in dem Werkzeug zu den durch die Schnittkräfte verursachten Spannungen durch Temperatur induzierte Spannungen auftreten.

Eine Schnittstelle gemäß dem Oberbegriff des Anspruchs 1 ist beispielsweise aus der DE 202004021168 U1 bekannt Bei dieser Schnittstelle weist ein Schaftwerkzeug einen zylindrischen Spannschaft mit einem konischen Schaftende auf, das zur axialen Abstützung formschlüssig in einem Innenkonus eines in der Werkzeugaufnahme axial verstellbaren Anschlussstücks mit zentrischer Schmiermittel-Zuleitung aufgenommen ist. Das Schaftende weist zudem einen im Wesentlichen radial gerichteten Schlitz auf, der eine in der Kegelfläche des Schaftendes liegende Mündungsöffnung eines zur Schaftachse versetzten innen liegenden Schmiermittel-Kanals erfasst. Die Schmiermitteleinspeisung aus der zentrischen Schmiermittel-Zuleitung in den zumindest einen innen liegenden Schmiermittel-Kanal im Schaftwerkzeug erfolgt über den im Wesentlichen radial gerichteten Schlitz. Die Kegelflächen des konischen Schaftendes des Schaftwerkzeugs und des Innenkonus des Anschlussstücks sind als feinbearbeitete Passungsflächen ausgebildet, die eng aneinander anliegen. Dank dieser Kegelflächenpaarung lässt sich diese Schnittstelle gegenüber der Außenumgebung leicht abdichten, so dass ein unerwünschtes Austreten von Schmiermittel beispielsweise in einen Spannbereich des Spannfutters vermieden wird.

Ausgehend von einer Schnittstelle, wie sie aus der DE 202004021168 U1 bekannt ist, besteht die der Erfindung zugrunde liegende Aufgabe darin, eine MMS-taugliche Schnittstelle zwischen und mit einem rundlaufenden Schaftwerkzeug und einer Schmiermittel-Einspeisestelle in einer Werkzeugaufnahme bereitzustellen, die sich fertigungstechnisch einfach realisieren lässt und eine stabile Schmiermittelversorgung gewährleistet.

Diese Aufgabe wird durch eine Schnittstelle mit den Merkmalen des Anspruchs 1 sowie eine hierfür geeignete Stellschraube mit den Merkmalen des Anspruchs 9 gelöst. Vorteilhafte oder bevorzugte Weiterbitdungen sind Gegenstand abhängiger Ansprüche.

Die Schnittstelle nach Anspruch 1 der vorliegenden Erfindung unterscheidet sich von einer Schnittstelle, wie sie aus der DE 202004021168 U1 bekannt ist, insbesondere dadurch, dass das konische Schaftende und die werkzeugaufnahmeseitig vorgesehene Schmiermittel-Übergabestelle, die vorzugsweise als eine in der Werkzeugaufnahme verstellbar angeordnete Stellschraube ausgebildet ist, einen trichterförmigen Schmiermittel-Übergaberaum (konischer Ringraum) einschließen, der sich zwischen der zentrischen Schmiermittel-Zuleitung und der Kegelflächenkontaktstelle zwischen dem konischen Schaftende und dem Innenkonus in der Schmiermittel-Übergabestelle erstreckt.

Der tricherförmige Schmiermittel-Übergaberaum gestattet eine in strömungstechnischer Hinsicht effiziente Übergabe Schmiermittels von der zentrischen Schmiermittel-Zuleitung der werkzeugaufnahmeseitig vorgesehenen Schmiermittel-Übergabestelle in den zumindest einen innen liegenden Schmiermittel-Kanal im Schaftwerkzeug. Die Trichterform stellt sicher, dass der Schmiermittet-Übergaberaum die Kegelfläche des konischen Schaftendes in dem Bereich radial innerhalb der Kegelflächenkontaktstelle, d.h. den Bereich der Kegelfläche des konischen Schaftendes, in dem die Mündungsöffnung(en) liegt(liegen), in Umfangsrichtung vollständig umschließt. Unabhängig von der Winkellage des Schaftwerkzeugs relativ zur Schmiermittel-Übergabestelle bezüglich einer gemeinsamen Längsmittelachse wie auch unabhängig davon, ob im Falle mehrerer Mündungsöffnungen alle auf demselben oder eine/einige auf kleineren Teilkreisen liegen, ermöglicht die erfindungsgemäße Gestaltung, dass die Mündungsöffnungen stets zugänglich sind, ohne dass ein das konische Schaftende radial durchsetzender Schlitz erforderlich wäre.

Diese Gestaltung des Schmiermittel-Übergaberaums ermöglicht daher sowohl in Axial-/Radialrichtung wie auch in Umfangsrichtung stets einen ungehinderten Schmiermittel-Zugang in die MündLingsöffnung(en) am Schaftende, wodurch auch unter dem Einfluss von Flienkäften eine stabile Schmiermittel-Strömung von der ze-ntrischen Schmiermittel-Zuleitung der werkzeugaufnahmeseitig vorgesehenen Schmiermittel-Übergabestelle in die Mündungsöffnung(en) am Schaftende gewährleistet ist. Im Unterschied zu der eingangs diskutierten, bekannten Schnittstelle ist daher ein die Mündungsöffnung erfassender, radial gerichteter Schlitz am Schaftende nicht mehr erforderlich, wodurch sich die Fertigung des konischen Schaftendes vereinfacht. Durch eine entsprechende Bemessung und Tolerierung des Volumens des trichterförmigen Schmiermittel-Übergaberaums lassen sich zudem sehr gute Schmiermittel-Strömungsverhäitnisse erzielen. Im Besonderen kann durch eine entsprechende Tolerierung des Schmiermittel-Übergaberaums erreicht werden, dass das über die zentrische Schmiermittel-Zuleitung eingespeiste Schmiermittel über den trichterförmigen Schmiermittel-Übergaberaum mit im Wesentlichen derselben oder einer höheren Strömungsgeschwindigkeit in den zumindest einen innen liegenden Schmiermittel-Kanal im Schaftwerkzeug einströmt, wie es durch die zentrische Schmiermittel-Zuleitung in den Schmiermittel-Übergaberaum einströmt. Im Fall eines aerosolartigen Schmiermittels lässt sich daher eine Wirbelbildung infolge von Druckpulsationen bedingt durch eine plötzliche Änderung der Strömungsgeschwindigkeit und dadurch eine Entmischung des Aerosols (Schmiermittel/Luft) erheblich reduzieren.

Die radial außerhalb der Mündungsöffnung(en) ausgebildete Kegelflächenkontaktstelle zwischen dem durch die Kegelfläche am Schaftende gebildeten Außenkonus und dem Innenkonus in der Schmiermittel-Übergabestelle ermöglicht unabhängig davon, ob die Kontaktstelle in Form eines sich in Umfangsrichtung erstreckende Linienkontakts oder Flächenkontakts realisiert ist, eine einfach zu herzustellende, zuverlässige Abdichtung der Schnittstelle gegenüber der Werkzeugaufnahme. Die Kegelfläche am konischen Schaftende wie auch der Innenkonus der Schmiermittel-Übergabestelle sind einfach zu fertigen. Zur Abdichtung der Schnittstelle sind der Außenkonus und der Innenkonus zumindest in dem Bereich radial außerhalb der Mündungsöffnung als fein bearbeitete Fügepassungsflächen ausgebildet.

Zur Vermeidung einer allzu starken Verkürzung der Länge des zylindrischen Spannabschnitts des Werkzeugschafts gegenüber der üblicherweise genormten gesamten Länge des Schafts ist das Schaftende vorzugsweise nicht als ein Kegel sondern als ein Kegelstumpf ausgebildet. In jedem Fall ist die das Schaftende bildende Kegelfläche lediglich durch die Mündungsöffnung des zumindest einen innen liegenden Schmiermittel-Kanals unterbrochen.

Der trichterförmige Schmiermittel-Übergaberaum erstreckt sich radial vorteilhaft so weit nach außen, dass er in Wesentlichen bündig mit der Mündungsöffnung des zumindest einen Schmiermittel-Kanals abschließt. Durch diese Weiterbildung lassen sich "Taschen" bzw. Toträume radial außerhalb der Mündungsöffnung des Schmiermittel-Kanals, in denen es möglicherweise zu einer Störung der Schmiermittel-Strömung und dadurch zu Entmischungen des Schmiermittels kommen könnte, weitestgehend vermeiden.

Das Längsschnittprofil und damit die Änderung der Strömungsquerschnittsfläche des trichterförmigen Schmiermittel-Übergaberaums in Strömungsrichtung wie auch das aus diesen Parametern resultierende Strömungsgeschwindigkeitsprofil des Schmiermittels lassen sich durch die Außenkontur des konischen Schaftendes und die Innenkontur der sich in Richtung der zentrischen Schmiermittel-Zuleitung verjüngenden Innenausnehmung der werkzeugaufnahmeseitig vorgesehenen Schmiermittel-Übergabestelle definieren.

In einer bevorzugten Ausführungsform ist der Konuswinkel des von der Kegelfläche des Schaftende gebildeten Außenkonus größer als der Konuswinkel des Innenkonus der werkzeugaufnahmeseitig vorgesehenen Schmiermittel-Übergabestelle. In diesem Fall ergibt sich zwischen dem Außenkonus des Schaftendes und dem Innenkonus der werkzeugaufnahmeseitig vorgesehenen Schmiermittel-Übergabestelle ein Linienkontakt. Des Weiteren verjüngt sich in dieser Ausführungsform der trichterförmige Schmiermittel-Übergaberaum, im axialen Längsschnitt betrachtet, in Richtung Schaftende. Toträume radial außerhalb der Mündungsöffnung(en) am Schaftende können dadurch klein gehalten werden. Die Verjüngung des trichterförmigen Schmiermittel-Übergaberaum, im axialen Längschnitt betrachtet, in Richtung Schaftende ermöglicht des Weiteren eine der Zunahme des Durchmessers des trichterförmigen Schmiermittel-Übergaberaums Rechnung tragende Anpassung der Strömungsquerschnittsfläche in Schmiermittel-Strömungsrichtung so, dass sich die jeweils gewünschten Strömungsverhäitnisse ergeben. Da sowohl der Innenkonus der werkzeugaufnahmeseitig vorgesehenen Schmiermittel-Übergabestelle wie auch Außenkonus des Schaftendes als reine Kegelflächen gebildet sind, erweist sich die Fertigung der Schnittstelle zudem als besonders einfach.

In einer weiteren bevorzugten Ausführungsform entspricht der Konuswinkel des Außenkonus des Schaftendes dem Konuswinkel des Innenkonus der werkzeugaufnahmeseitig vorgesehenen Schmiermittel-Übergabestelle. Durch diese Gestaltung ergibt sich radial außerhalb der Mündungsöffnung(en) eine Flächenkontakt zwischen dem Schaftende und der werkzeugaufnahmeseitig vorgesehenen Schmiermittel-Übergabestelle und bei entsprechender Feinbearbeitung der beiden Kegelflächenpaarung eine sehr hohe Dichtheit der Schnittstelle. Um in dieser Ausführungsform eine Schmiermittef-Strömung in die Mündungsöffnung(en) sicherzustellen, ist vorgesehen, dass der den Außenkonus des Schaftendes stützende Innenkonus in seinem Scheitel in einen Zylinderabschnitt von definierter Länge mündet, der schließlich über einen weiteren, sich in Richtung der zentrischen Schmiermittel-Zuleitung verjüngenden Innenkonus mit der zentrischen Schmiermittel-Zuleitung verbunden ist. Der weitere Innenkonus hat vorzugsweise denselben Konuswinkel wie der das Schaftende stützende Innenkonus der werkzeugaufnahmeseitig vorgesehenen Schmiermittel-Übergabestelle. Dank des Zylinderabschnitts ist daher auch in dieser Ausführungsform der erforderlichen Zugang des Schmiermittels zu der(den) Mündungsöffnung(en) am Schaftende stets gewährleistet. Durch eine entsprechende Bemessung der axialen Länge des Zylinderabschnitts wird zudem erreicht, dass der trichterförmige Schmiermittel-Übergaberaum in Schmiermittel-Strömungsrichtung nicht spitz ausläuft, wodurch bis zum Auslauf des Schmiermittet-Übergaberaums in Strömungsrichtung ein gewünschtes Ringraumvolumen erhalten werden kann.

Der zumindest eine innen liegende Schmiermittel-Kanal kann durchgehend außerhalb der Schaftachse liegen. Selbstverständlich ist die Erfindung nicht auf den Einsatz mit nur einem Schmiermittel-Kanal beschränkt. Wenn nur ein Schmiermittel-Kanal verwendet wird, ist eine zentrische Anordnung des Schmiermittel-Kanals denkbar, der dann in eine außerhalb der Schaftachse liegende (exzentrisch angeordnete) Mündungsöffnung mündet.

Die Schmiermitt-Übergabestelle ist bevorzugt als eine in der Werkzeugaufnahme axial verstellbar angeordnete Stellschraube ausgebildet, die vorteilhaft im Wesenttichen die Form eines gestuften Zylinders hat, wobei der Abschnitt größeren Durchmessers die Innenausnehmung ausbildet, und der Abschnitt kleineren Durchmessers ein Außengewinde zur Verschraubung in einer Gewindebohrung in der Werkzeugaufnahme aufweist. Diese Form ist bereits aus der eingangs diskutierten Druckschrift bekannt und hat sich bewährt.

Die Anwendung einer derartigen Stellschraube mit einer durch einen Zylinderabschnitt in zwei Innenkonusse getrennten Innenausnehmung zur Schmiermittel-Zuführung ist nicht auf ein Schaftwerkzeug mit einem konischen Schaftende beschränkt, sondern beispielsweise auch für ein Schaftwerkzeug mit einem radial gerichteten Schlitz geeignet, wie es in der eingangs diskutierten Druckschrift beschrieben ist. Aus diesem Grund wird für eine derartige Stellschraube unabhängig von der erfindungsgemäßen Schnittstelle um Schutz nachgesucht.

Die Werkzeugaufnahme ist ein Spannfutter, insbesondere ein Hydrodehnspannfutter. Selbstverständlich können auch andere Arten von Spannfuttern wie Schrumpfspannfutter oder Mehrbakkenfutter verwendet werden.

Bevorzugte Ausführungsformen der Erfindung sind in der Zeichnung dargestellt und werden nachfolgend näher erläutert. In der Zeichnung zeigt:
Fig. 1 einen axialen Längsschnitt durch eine Werkzeugaufnahme mit einer ersten Ausführungsform einer erfindungsgemäßen Schnittstelle;
Fig. 2 die erste Ausführungsform der erfindungsgemäßen Schnittstelle; und
Fig. 3 eine zweite Ausführungsform einer erfindungsgemäßen Schnittstelle.

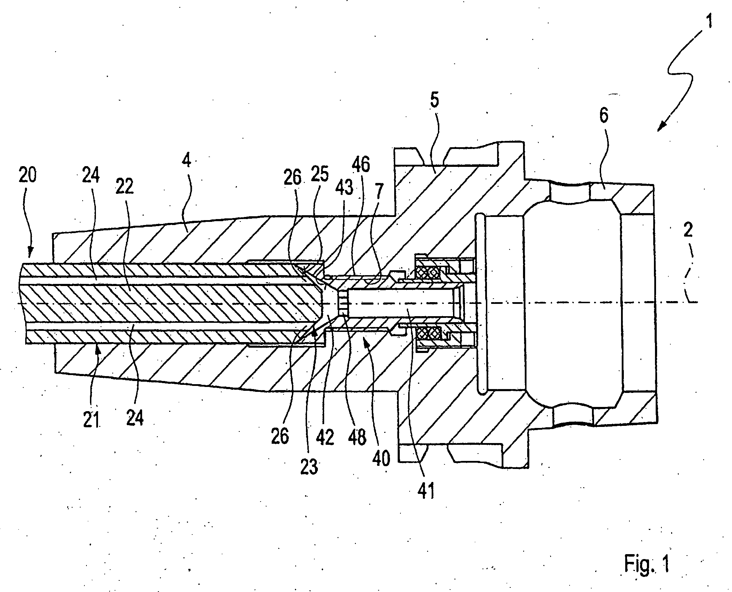

Fig. 1 zeigt einen axialen Längsschnitt durch eine Werkzeugaufnahme 1 in Form eines Spannfutters (Hydrodehnspannfutter), die einen Spannabschnitt 4, einen Mittelabschnitt 5 sowie einen Kupplungsabschnitt 6 umfasst, welche sich entlang einer gemeinsamen Längsmittelachse 2 erstrecken. Der Spannabschnitt 4 ist dazu vorgesehen, ein rundlaufendes Schaftwerkzeug 20, beispielsweise ein Bohrwerkzeug, (in Fig. 1 verkürzt dargestellt) einzuspannen. Im Mittelabschnitt 5 ist eine Schmiermittel-Übergabestelle in Form einer axial verstellbar angeordneten Stellschraube 40 vorgesehen. Über den Kupplungsabschnitt 6 erfolgt die Ankupplung des Spannfutters 1 an eine in Fig. 1 nicht gezeigte Spanneinrichtung einer ebenfalls nicht gezeigten Werkzeugmaschine, beispielsweise Bohrmaschine.

Das Schaftwerkzeug 20 weist einen (in Fig. 1 nicht gezeigten) Bearbeitungsabschnitt und einen Schaft 21 auf, der sich funktional in einen zylindrischen Spannabschnitt 22 und ein konisches Schaftende 23 einteilen lässt. Über den zylindrischen Spannabschnitt 22 wird das Schaftwerkzeug 20 im Spannabschnitt 4 des Spannfutters 1 eingespannt. Das konische Schaftende 23, das die Form eines Kegelstumpfes hat, dient zur dichten Ankopplung des Schaftwerkzeugs 20 an die spannfutterseitig vorgesehene Stellschraube 40. Zu diesem Zweck weist das konische Schaftende 23 eine einen Außenkonus bildende Kegelfläche 25 auf. Das konische Schaftende 23 unterscheidet sich damit sowohl in der Funktion als auch in der Oberflächengüte von der bei herkömmlichen Schaftwerkzeugen vorhandenen Fase.

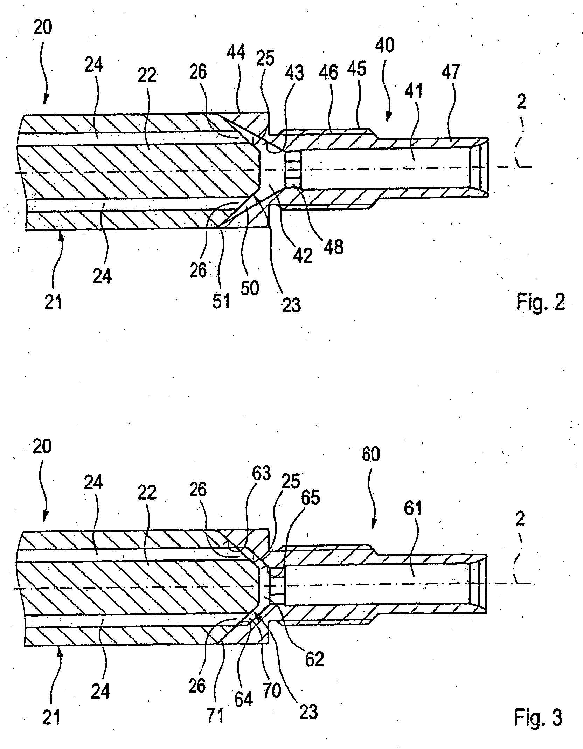

Wie in Fig. 2 gezeigt, weist das Schaftwerkzeug 20 des Weiteren zwei diametral angeordnete, auf demselben Teilkreis liegende Schmiermittel-Kanäle 24 auf, die in der Kegelfläche 25 des Schaftendes 23 jeweils in einer außerhalb der Schaftachse 2 liegenden Mündungsöffnung 26 enden.

Das Schmiermittel, das werkzeugmaschinenseitig (in Fig. 1 von rechts) abgeliefert wird, wird über die Stellschraube 40 in die Schmiermittel-Kanäle 24 des Schaftwerkzeugs 20 eingespeist. Hierzu weist die Stellschraube 40, in Fig. 2 von rechts nach links betrachtet, eine zentrische Schmiermittel-Zuleitung 41 auf, die in den Scheitel einer sich in Richtung konisches Schaftende 23 im Durchmesser vergrößernden Innenausnehmung 42 mündet. Die Innenausnehmung 42 ist von einer einen Innenkonus bildenden Kegelfläche 43 gebildet.

Um eine möglichst dichte Anlage der den Außenkonus bildende Kegelfläche 25 des konischen Schaftendes 23 am Innenkonus 43 der Stellschraube 40 zu erhalten, sind die beiden Kegelflächen 25 des Schaftendes 23 und der Innenkonus, 43 zumindest im Kontaktbereich, der bei axialer Betrachtung radial außerhalb der Mündungsöffnungen 26 liegt, möglichst fein, d.h. auf Fügepassung, bearbeitet.

Wie es in Fig. 1 und Fig. 2 dargestellt ist, ist das Schaftwerkzeug 20 mit seinem konischen Schaftende 23 am Innenkonus 43 der Stellschraube 40 in dem Bereich radial außerhalb der Mündungsöffnungen 26 abgestützt. Die Erfindung betrifft im Besonderen die Gestaltung der Schnittstelle zwischen dem konischen Schaftende 23 des Schaftwerkzeugs 20 und der im Spannfutter 1 angeordneten Stellschraube 40. Die erfindungsgemäße Schnittstelle zeichnet sich insbesondere dadurch aus, dass das konische Schaftende 23 und der Innenkonus 43 einen trichterförmigen Schmiermittel-Übergaberaum 50 einschließen, der sich zwischen der zentrischen Schmiermittel-Zuleitung 41 und der Kegelflächenkontaktstelle 51 zwischen dem konischen Schaftende 23 und dem Innenkonus 43 der Stellschraube 40 erstreckt.

In der ersten Ausführungsform ist der Konuswinkel des Außenkonus 25 des Schaftendes 23 (gemessen gegenüber der Schaftachse 2) größer als der Konuswinkel des Innenkonus 43 der Stellschraube 40, so dass sich zwischen dem Außenkonus 25 des Schaftendes 23 und dem Innenkonus 43 der Stettschraube 40 ein Linienkontakt ergibt. Eine zuverlässige Abdichtung der Schnittstelle erfolgt durch eine entsprechend feine Bearbeitung des Außenkonus 25 des Schaftendes 23 und des Innenkonus 43 zumindest im Bereich der Kegelflächenkontaktstelle 51, d.h. im Bereich radial außerhalb der Mündungsöffnungen 26. Durch diese Gestaltung verjüngt sich der trichterförmige Schmiermittel-Übergaberaum 50, im axialen Längsschnitt betrachtet, in Richtung des konischen Schaftendes 23 bzw. in Strömungsrichtung des Schmiermittels. Der trichterförmige Schmiermittel-Übergaberaum 50 erstreckt sich in Fig. 1 radial geringfügig über die Mündungsöffnungen 26 hinaus, Idealerweise schließt der trichterförmige Schmiermittel-Übergaberaum 50 radial im Wesentlichen bündig mit den Mündungsöffnungen 26 ab.

Der Schmiermittef-Übergaberaum 50 gestattet eine in strömungstechnischer Hinsicht effiziente Übergabe des Schmiermittels von der zentrischen Schmiermittel-Zuleitung 41 in die Schmiermittel-Kanäle 24 des Schaftwerkzeugs 20. Die Trichterform umschließt die Kegelfläche 25 des Schaftendes 23 in dem Bereich radial innerhalb der Kegelflächenkontaktstelle 51, d.h. in dem Bereich, in dem die Mündungsäffnungen 26 liegen, in Umfangsrichtung vollständig. Unabhängig von der Winkellage des Schaftwerkzeugs 20 relativ zur Stellschraube 40 um die Schaftachse 2 sind durch diese Gestaltung die Mündungsöffnungen 26 stets zugänglich, ohne dass ein das konische Schaftende 23 radial durchsetzender Schlitz erforderlich wäre. Darüber hinaus kann durch eine entsprechende Bemessung bzw. Tolerierung der Kegelwinkel des Außenkonus 25 des konischen Schaftendes 23 und des Innenkonus 43 der Stellschraube 40 das axiale Strömungsgeschwindigkeitsprofil in der Weise optimiert werden, dass das Schmiermittel aus der zentrischen Schmiermittel-Zuleitung 41 mit in etwa konstanter Strömungsgeschwindigkeit in die Schmiermittel-Kanäle 24 strömt.

Aufgrund der Trichterform des Schmiermittet-Übergaberaums 50 wird sich zumindest unter dem Einfluss von den im Betrieb des Werkzeugs auftretenden Fliehkräften ein den gesamten trichterförmigen Schmiermittel-Übergaberaum 50 beaufschlagendes Strömungsprofil des Schmiermittels ausbilden. Durch eine geeignete Begrenzung der Ringquerschnitisfläche des trichterförmigen Schmiermittel-Übergaberaums 50, d.h. der Strömungsquerschnittfläche, lässt sich eine kontinuierliche Schmiermittel-Strömung aus der zentrischen Schmiermittet-Zuieitung 41 in Schmiermittel-Kanäle 26 realisieren. Anders ausgedrückt lässt sich durch eine geeignete Begrenzung des Volumens des trichterförmigen Schmiermittel-Übergaberaums 50 beispielsweise eine Angleichung/Annäherung der Strömungsgeschwindigkeiten im Bereich der zentrischen Schmiermittel-Zuleitung 41 und im Bereich der Schmiermittel-Kanäle 26 realisieren. Andererseits lässt sich durch eine entsprechende Bemessung des Volumens des trichterförmigen Schmiermittel-Übergaberaums 50 aber auch eine von der Strömungsgeschwindigkeit des Schmiermittel-Stroms in der zentrischen Schmiermittel-Zuleitung 41 verschiedene Strömungsgeschwindigkeit des in die Schmiermittel-Kanäle 26 strömenden Schmiermittels erzielen, Genauer gesagt wird das Schmiermittel in dem Fall, in dem der gesamte Strömungsflächenquerschnitt der Schmiermittel-Kanäle 26 kleiner ist als der Strömungsftächenquerschnitt der zentrischen Schmiermittel-Zuleitung 41, aus strömungstechnischen Gründen schneller durch die beiden, Schmiermittel-Kanäle 26 als durch die zentrische Schmiermittel-Zuleitung 41 strömen, so lange ein Strömungsgleichgewicht in dem Gesamtsystem herrscht. In jedem Fall lassen sich Druckpulsationen vermeiden oder gering halten, welche zum einen zu ungleichmäßiger Schmiermittel-Zufuhr zum (nicht gezeigten) Bearbeitungsabschnitt des Schaftwerkzeugs 20 und zum Anderen zu Entmischungen eines aerosolförmigen Schmiermittels führen können.

Testläufe haben ergeben, dass nach eine kurzen Anlaufphase, in der sich der Schmiermittel-Übergaberaum 50 mit Schmiermittel- gefüllt hat, die anschließende Versorgung des Bearbeitungsabschnitts des Schaftwerkzeugs 20 mit Schmiermittel problemlos abläuft. Entmischungen, kurzzeitige Unterbrechungen der Schmiermittel-Zufuhr oder Schwankungen in der Zufuhrmenge lassen sich, wie oben erwähnt, durch eine geeignete Bemessung und Tolerierung der den Schmiermittel-Übergaberaum 50 bestimmenden geometrischen Parameter vermeiden.

Die Stellschraube 40 hat, wie es in Fig. 2 dargestellt ist, die Form eines gestuften Zylinders. In einem Abschnitt 44 größeren Durchmessers ist die Innenausnehmung 42 ausgebildet, während ein Abschnitt 45 kleineren Durchmessers ein Außengewinde 46 zur Verschraubung in einer Gewindebohrung 7 des Spannfutters 1 dient. Darüber hinaus weist die Stellschraube 40 einen Innensechskant 48 auf, über den mittels eines passenden Werkzeugs die Stellschraube 40 im Spannfutter 1 axial verstellt werden kann. Ferner zeigt die Fig. 2 eine rohrartige Verlängerung 47 der Stellschraube 40, die zur Verbindung mit einem werkzeugmaschinenseitig vorgesehenen (nicht dargestellten= Schmiermittel-Übergaberohr dient.

In Fig. 3 ist eine zweite Ausführungsform der erfindungsgemäßen Schnittstelle gezeigt. Die zweite Ausführungsform unterscheidet sich von der ersten Ausführungsform lediglich in der Ausgestaltung der Stellschraube 60 und der das konische Schaftende 23 des Schaftwerkzeugs 20 aufnehmenden Innenausnehmung 62.

Die innenausnehmung 62 der Stellschraube 60 ist in der zweiten Ausführungsform gebildet von zwei durch einen Zylinderabschnitt 64 von vorgegebener Länge miteinander verbundenen Innenkonussen 63 und 65. Der radial innere Innenkonus 65 mündet in seinem Scheitelbereich in die zentrische Schmiermittel-Zuleitung 61, während der radial äußere Innenkonus 63 an dem Außenkonus 25 des Schaftendes 23 dicht anliegt.

Wie in der ersten Ausführungsform zeichnet sich die Schnittstelle gemäß der zweiten Ausführungsform auch dadurch aus, dass das konische Schaftende 23 und der radial innere Innenkonus 65b der Stellschraube 60 einen trichterförmigen Schmiermittel-Übergaberaum 50 einschließen, der sich zwischen der zentrischen Schmiermittel-Zuleitung 61 und der Kegelflächenkontaktstelle 71 zwischen dem konischen Schaftende 23 und dem radial äußeren Innenkonus 63 der Stellschraube 60 erstreckt. Weiter ist wie in der ersten Ausführungsform das Schaftwerkzeug 20 mit seinem konischen Schaftende 23 in einem Bereich radial außerhalb der Mündungsöffnungen 26 an der Stellschraube 60 abgestützt.

Jedoch haben der radial äußere innenkonus 63 wie auch der radial innere Innenkonus 65 im Unterschied zur ersten Ausführungsform denselben Konuswinkel wie der Außenkonus 25 des konischen Schaftendes 23. Im Unterschied zur ersten Ausführungsform ergibt sich daher zwischen dem Außenkonus 25 des Schaftendes 23 und dem Innenkonus 63 der Stellschraube 60 eine flächige Anlage. Im Sinne einer möglichst guten Abdichtung der Schnittstelle sind die den Außenkonus 25 und Innenkonus 63 bildenden Kegelflächen aber auch möglichst fein, d.h. auf Fügepassung, bearbeitet.

Die axiale Länge des Zylinderabschnitts 64 bestimmt in der zweiten Ausführungsform die Strömungsquerschnittsfläche des trichterförmigen Schmiermittel-Übergaberaums 70. Durch eine entsprechende Anpassung der Länge des Zylinderabschnitts 64 lassen sich daher gute Strömungsverhältnisse ähnlich wie in der ersten Ausführungsform erzielen.

Der trichterförmige Schmiermittel-Übergaberaum 70 erstreckt sich in Fig. 3 radial radial im Wesentlichen so weit nach außen, dass er bündig mit den Mündungsöffnungen 26 endet.

## Patentansprüche

1. Schnittstelle mit und zwischen
einem in einem Spannfutter (1) angeordneten Schaftwerkzeug (20), das einen Bearbeitungsabschnitt, einen Schaft (21) mit einem zylinderischen Spannabschnitt (22) und auf der dem Bearbeitungsabschnitt abgewandten Seite einem konischen Schaftende (23) und zumindest einen innen liegenden Schmiermittel-Kanal (26) mit einer in der Kegelmantelfläche (25) des Schaftendes (23) außerhalb der Schaftachse (2) liegenden Mündungsöffnung (26) aufweist, und
einer in dem Spannfutter (1) vorgesehenen Schmiermittel-Übergabestelle (40; 60), die eine sich in Richtung einer zentrischen Schmiermittel-Zuleitung (41; 61) verjüngende Innenausnehmung (42; 62) aufweist, die einen das konische Schaftende (23) radial außerhalb der Mündungsöffnung (26) stützenden Innenkonus (43; 63) definiert, **dadurch gekennzeichnet, dass**
das konische Schaftende (23) und die Schmiermittel-Übergabestelle (40; 60) einen trichterförmigen Schmiermittel-Übergaberaum (50; 70) einschließen, der sich zwischen der zentrischen Schmiermittel-Zuleitung (41; 61) und einer Konusflächenkontaktstelle (51; 71) zwischen dem Innenkonus (43; 63) der Schmiermittel-Übergäbestelle (40; 60) und dem konischen Schaftende (23) erstreckt.

2. Schnittstelle nach Anspruch 1, **dadurch gekennzeichnet, dass**
der Konuswinkel des konischen Schaftendes (23) größer ist als der Konuswinkel des Innenkonus (43) der Schmiermittel-Übergabestelle (40), und
der Innenkonus (43) in seinem Scheitel in die zentrische Schmiermittel-Zuleitung (41) mündet.

3. Schnittstelle nach Anspruch 1, **dadurch gekennzeichnet, dass**
der Konuswinkel des konischen Schaftendes (23) so groß ist wie der Konuswinkel des Innenkonus (63) der Schmiermittel-Übergabestelle (60),
der Innenkonus (63) in seinem Scheitel in einen Zylinderabschnitt (64) von definierter Länge mündet, und
der Zylinderabschnitt (64) über einen weiteren, sich in Richtung der zentrischen Schmiermittel-Zuleitung (61) verjüngenden Innenkonus (65) mit der zentrischen Schmiermittel-Zuleitung (61) verbunden ist.

4. Schnittstelle nach einem der Ansprüche 1 bis 3, **dadurch gekennzeichnet, dass** sich der Schmiermittel-Übergaberaum (50; 70) radial so weit nach außen erstreckt, dass er im Wesentlichen bündig mit der Mündungsöffnung (26) des zumindest einen Schmiermittel-Kanals (24) endet.

5. Schnittstelle nach einem der Ansprüche 1 bis 4, **dadurch gekennzeichnet, dass** die Schmiermittel-Übergabestelle (40; 60) als eine in dem Spannfutter (1) verstellbar angeordnete Stellschraube ausgebildet ist.

6. Schnittstelle nach Anspruch 5, **dadurch gekennzeichnet, dass**
die Stellschraube (40; 60) im Wesentlichen die Form eines gestuften Zylinders hat,
der-Abschnitt (44) größeren Durchmessers die Innenausnehmung (42) ausbildet, und
der Abschnitt (45) kleineren Durchmessers ein Außengewinde (46) zur Verschraubung in einer Gewindebohrung in der Spannfutter (1) aufweist.

7. Schnittstelle nach einem der Ansprüche 1 bis 6, **dadurch gekennzeichnet, dass** das Spannfutter (1) ein Hydrodehnspannfutter ist,

8. Schnittstelle nach einem der Ansprüche 1 bis 7, **dadurch gekennzeichnet, dass** die Strömungsquerschnittsfläche des trichterförmigen Schmiermittel-Übergaberaums (50; 70) im Bereich der Mündungsöffnung (26) des zumindest einen Schmiermittel-Kanals (24) so toleriert ist, dass sich eine Schmiermittel-Übergabe vom zentrischen Schmiermittel-Kanal (41; 61) in den zumindest einen innen liegenden Schmiermittel-Kanal (24) mit einer im Wesentlichen konstanten Strömungsgeschwindigkeit ergibt.

9. Schnittstelle nach einem der Ansprüche 1 bis 8, **dadurch gekennzeichnet, dass** das konische Schaftende (23) die Form eines Kegelstumpfes hat.

10. Stellschraube (60) zur Verwendung als Schmiermittel-Übergabestelle in einer Schnittstelle nach einem der Ansprüche 1 bis 9, mit einer bezüglich der Schraubenachse (2) konzentrisch ausgebildeten Innenausnehmung (62), die in eine zentrische Schmiermittel-Zuleitung (61) mündet, **dadurch gekennzeichnet, dass**
die Innenausnehmung (62) einen Innenkonus (63) zur Stützung des konischen Schaftendes (23) aufweist, der in seinem Scheitel in einen Zylinderabschnitt (64) von definierter Länge mündet, und
der Zylinderabschnitt (64) über einen weiteren, sich in Richtung der zentrischen Schmiermittel-Zuleitung (61) verjüngenden Innenkonus (65) mit der zentrischen Schmiermittel-Zuleitung (61) verbunden ist.

11. Schnittstelle nach Anspruch 10 **dadurch gekennzeichnet, dass**
die Stellschraube (60) im Wesentlichen die Form eines gestuften Zylinders hat,
der Abschnitt größeren Durchmessers die Innenausnehmung (62) ausbildet, und
der Abschnitt kleineren Durchmessers ein Außengewinde zur Verschraubung in einer Gewindebohrung in dem Spannfutter (1) aufweist.

## Claims

1. Interface with and between
a shaft tool (20) which is arranged in a clamping chuck (1) and which has a processing portion, a shaft (21) having a cylindrical clamping portion (22) and, at the side facing away from the processing portion, a conical shaft end (23) and at least one inner lubricant channel (26) having a mouth opening (26) which is located outside the shaft axis (2) in the conical covering face (25) of the shaft end (23), and
a lubricant transfer location (40; 60) which is provided in the clamping chuck (1) and which has an inner recess (42; 62) which tapers in the direction of a central lubricant supply line (41; 61) and which defines an inner core (43; 63) which supports the conical shaft end (23) radially outside of the mouth opening (26), **characterized in that**
the conical shaft end (23) and the lubricant transfer location (40; 60) enclose a funnel-like lubricant transfer space (50; 70) which extends between the central lubricant supply line (41; 61) and a cone face contact location (51; 71) between the inner cone (43; 63) of the lubricant transfer location (40; 60) and the conical shaft end (23).

2. Interface according to claim 1, **characterized in that**
the cone angle of the conical shaft end (23) is greater than the cone angle of the inner cone (43) of the lubricant transfer location (40), and
the inner cone (43) opens at the apex thereof in the central lubricant supply line (41).

3. Interface according to claim 1, **characterized in that**
the cone angle of the conical shaft end (23) is as large as the cone angle of the inner cone (63) of the lubricant transfer location (60),
the inner cone (63) opens at the apex thereof in a cylindrical portion (64) having a defined length, and
the cylindrical portion (64) is connected to the central lubricant supply line (61) by means of another inner cone (65), which tapers in the direction of the central lubricant supply line (61).

4. Interface according to one of claims 1 to 3, **characterized in that** the lubricant transfer space (50; 70) extends radially outwards to such an extent that it terminates substantially in alignment with the mouth opening (26) of the at least one lubricant channel (24).

5. Interface according to one of claims 1 to 4, **characterized in that**
the lubricant transfer location (40; 60) is constructed as an adjusting screw which is adjustably arranged in the clamping chuck (1).

6. Interface according to claim 5, **characterized in that**
the adjusting screw (40; 60) is substantially in the form of a stepped cylinder,
the portion (44) having a larger diameter forms the inner recess (42) and
the portion (45) having a smaller diameter has an outer thread (46) for screwing in a threaded hole in the clamping chuck (1).

7. Interface according to one of claims 1 to 6, **characterized in that** the clamping chuck (1) is a hydraulic clamping chuck.

8. Interface according to one of claims 1 to 7, **characterized in that** the flow cross-section surface area of the funnel-shaped lubricant transfer space (50; 70) has such tolerances in the region of the mouth opening (26) of the at least one lubricant channel (24) that a lubricant transfer from the central lubricant channel (41; 61) into the at least one internal lubricant channel (24) is produced with a substantially constant flow speed.

9. Interface according to one of claims 1 to 8, **characterized in that** the conical shaft end (23) is frustoconical in shape.

10. Adjusting screw (60) for use as lubricant transfer location in an interface according to one of claims 1 to 9, having an inner recess (62), which is constructed concentrically relative to the screw axis (2) and which opens in a central lubricant supply line (61), **characterized in that**
the inner recess (62) has, for supporting the conical shaft end (23), an inner cone (63) which opens at the apex thereof in a cylindrical portion (64) of defined length, and
the cylindrical portion (64) is connected to the central lubricant supply line (61) by means of another inner cone (65), which tapers in the direction of the central lubricant supply line (61).

11. Interface according to claim 10, **characterized in that** the adjusting screw (60) is substantially in the form of a stepped cylinder,
the portion having a larger diameter forms the inner recess (62), and
the portion having a smaller diameter has an outer thread for screwing in a threaded hole in the clamping chuck (1).

## Revendications

1. Interface avec et entre
un outil à tige (20) disposé dans un mandrin de serrage (1), lequel outil à tige présente une section d'usinage, une tige (21) dotée d'une section de serrage (22) cylindrique et d'une extrémité de tige (23) conique sur le côté opposé à la section d'usinage et au moins un canal pour lubrifiant (26) se trouvant à l'intérieur et doté d'un orifice de sortie (26) se trouvant dans la surface d'enveloppe conique (25) de l'extrémité de tige (23) à l'extérieur de l'axe de tige (2), et
un point de transfert de lubrifiant (40 ; 60) prévu dans le mandrin de serrage (1), lequel point de transfert présente un évidement intérieur (42 ; 62) se rétrécissant en direction d'une conduite d'arrivée de lubrifiant (41 ; 61) centrale, lequel évidement intérieur définit un cône intérieur (43 ; 63) soutenant l'extrémité de tige (23) conique radialement à l'extérieur de l'orifice de sortie (26), **caractérisée en ce que**
l'extrémité de tige (23) conique et le point de transfert de lubrifiant (40 ; 60) renferment un espace de transfert de lubrifiant (50 ; 70) présentant une forme d'entonnoir, lequel espace s'étend entre la conduite d'arrivée de lubrifiant (41 ; 61) centrale et un point de contact de surface conique (51 ; 71) entre le cône intérieur (43 ; 63) du point de transfert de lubrifiant (40 ; 60) et l'extrémité de tige (23) conique.

2. Interface selon la revendication 1, **caractérisée en ce que**
l'angle conique de l'extrémité de tige (23) conique est plus grand que l'angle conique du cône intérieur (43) du point de transfert de lubrifiant (40), et
le sommet du cône intérieur (43) débouche dans la conduite d'arrivée de lubrifiant (41) centrale.

3. Interface selon la revendication 1, **caractérisée en ce que**
l'angle conique de l'extrémité de tige (23) conique est aussi grand que l'angle conique du cône intérieur (63) du point de transfert de lubrifiant (60),
le sommet du cône intérieur (63) débouche dans une section de cylindre (64) d'une longueur définie, et
la section de cylindre (64) est reliée à la conduite d'arrivée de lubrifiant (61) centrale par l'intermédiaire d'un autre cône intérieur (65) se rétrécissant en direction de la conduite d'arrivée de lubrifiant (61) centrale.

4. Interface selon l'une quelconque des revendications 1 à 3, **caractérisée en ce que** l'espace de transfert de lubrifiant (50 ; 70) s'étend vers l'extérieur radialement si loin que son extrémité est sensiblement alignée avec l'orifice de sortie (26) de l'au moins un canal pour lubrifiant (24).

5. Interface selon l'une quelconque des revendications 1 à 4, **caractérisée en ce que** le point de transfert de lubrifiant (40 ; 60) est réalisé comme une vis de réglage disposée de manière ajustable dans le mandrin de serrage (1).

6. Interface selon la revendication 5, **caractérisée en ce que**
la vis de réglage (40 ; 60) présente sensiblement la forme d'un cylindre étagé,
la section (44) de diamètre plus grand forme l'évidement intérieur (42), et
la section (45) de diamètre plus petit présente un filetage extérieur (46) servant à l'assemblage par vissage dans un alésage fileté dans le mandrin de serrage (1).

7. Interface selon l'une quelconque des revendications 1 à 6, **caractérisée en ce que** le mandrin de serrage (1) est un mandrin de serrage expansible hydrauliquement.

8. Interface selon l'une quelconque des revendications 1 à 7, **caractérisée en ce que** la surface de section transversale d'écoulement de l'espace de transfert de lubrifiant (50 ; 70) présentant une forme d'entonnoir est tolérée dans la zone de l'orifice de sortie (26) de l'au moins un canal pour lubrifiant (24) de telle sorte qu'il en résulte un transfert de lubrifiant du canal pour lubrifiant (41 ; 61) central dans l'au moins un canal pour lubrifiant (24) se trouvant à l'intérieur à une vitesse d'écoulement sensiblement constante.

9. Interface selon l'une quelconque des revendications 1 à 8, **caractérisée en ce que** l'extrémité de tige (23) conique présente la forme d'un cône tronqué.

10. Vis de réglage (60) à utiliser dans une interface en tant que point de transfert de lubrifiant selon l'une quelconque des revendications 1 à 9, avec un évidement intérieur (62) réalisé de manière concentrique par rapport à l'axe de vis (2), lequel évidement intérieur débouche dans une conduite d'arrivée de lubrifiant (61) centrale, **caractérisée en ce que**
l'évidement intérieur (62) présente un cône intérieur (63) servant à soutenir l'extrémité de tige (23) conique, le sommet duquel cône intérieur débouchant dans une section de cylindre (64) d'une longueur définie, et
la section de cylindre (64) est reliée à la conduite d'arrivée de lubrifiant (61) centrale par l'intermédiaire d'un autre cône intérieur (65) se rétrécissant en direction de la conduite d'arrivée de lubrifiant (61) centrale.

11. Interface selon la revendication 10, **caractérisée en ce que**
la vis de réglage (60) présente sensiblement la forme d'un cylindre étagé,
la section de diamètre plus grand forme l'évidement intérieur (62), et
la section de diamètre plus petit présente un filetage extérieur servant à l'assemblage par vissage dans un alésage fileté dans le mandrin de serrage (1).
